# EUROPÄISCHE PATENTSCHRIFT

(11) **EP 4 198 368 B1**
(45) Veröffentlichungstag und Bekanntmachung des Hinweises auf die Patenterteilung: **16.10.2024**
(21) Anmeldenummer: 22198760.5
(22) Anmeldetag: 29.09.2022
(51) Int. Cl.: F16L 29/00, F16L 37/373

(54) **TRENNBARES HYDRAULISCHES SYSTEM**
DISCONNECTABLE HYDRAULIC SYSTEM
SYSTÈME HYDRAULIQUE SÉPARABLE

(30) Priorität: 14.12.2021 DE 102021133085
(43) Veröffentlichungstag der Anmeldung: 21.06.2023
(73) Patentinhaber: LABOM Mess- und Regeltechnik GmbH, 27798 Hude (DE)
(72) Erfinder: Rathkamp, Hans-Jürgen, 26209 Hatten (DE)
(74) Vertreter: Wasiljeff, Johannes M.B.

(56) Entgegenhaltungen:
- DE-A1- 102009 015 505
- US-A- 2 357 232
- US-A- 5 286 129

## Beschreibung

Die Erfindung betrifft ein trennbares hydraulisches System gemäß dem Oberbegriff von Anspruch 1.

Hydraulische Systeme werden an vielen Stellen zur Kraft- bzw. Druckübertragung eingesetzt. Ein Anwendungsfall sind Druckmesssysteme mit Druckmittlern für eine präzise Druckmessung in der Prozessindustrie. Dabei überträgt ein geschlossenes hydraulisches System den Druck, ggf. mittels einer Fernleitung auch über größere Distanzen bis hin zu 15 m, von einer als Trennmembran wirkenden Druckmittlermembran eines Druckmittlers an der Messstelle zum eigentlichen Sensorelement.

Die Elemente solcher Druckmesssysteme sind üblicherweise miteinander verschweißt, um die Haltbarkeit und Dichtigkeit sicherzustellen.

Druckmesssysteme mit einer Fernleitung und einem Druckmittler sind jedoch aufwändig bei der Installation, da der Druckmittler oder das Druckmessgerät entlang der Fernleitungsstrecke bewegt werden muss. Damit ist jedoch eine - vorzugsweise geschützte - Verlegung der Fernleitung in Rohren oder durch enge Decken- bzw. Wanddurchbrüche unmöglich.

Bei Systemen mit großen Druckmittlern, insbesondere bei Differenzdrucksystemen mit langen Fernleitungen sind die Handhabung und die Montage aufwändig und kompliziert.

Ferner unterliegen Druckmittler je nach Anwendung einem gewissen Verschleiß. So können sich beispielsweise Ablagerungen an der Druckmittlermembran bilden oder Schleifpartikel im Prozessmedium, wie beispielsweise Sand bei der Betonherstellung, schleifen an der Druckmittlermembran und verändern dadurch die Eigenschaften der Membran bis hin zu ihrer Zerstörung. Allgemein führen aggressive und abrasive Medien sowie mechanische Reinigungsprozesse zu einem Verschleiß von Druckmittlermembranen. Derartige Ablagerungen und derartiger Verschleiß können bereits vor einer Zerstörung der Membran die für die Druckmessung relevanten Eigenschaften der Membran negativ beeinflussen.

Es besteht daher der Wunsch, einen Druckmittler auf einfache Weise von einem Druckmessgerät trennen zu können, um einen Druckmittler, beispielsweise einen defekten, verschlissenen oder zu wartenden Druckmittler, austauschen zu können.

Zudem müssen Druckmessgeräte häufig nach einer gewissen Nutzungsdauer kalibriert werden. Die Kalibrierung erfolgt üblicherweise in einer entsprechend eingerichteten Werkstatt bzw. einem entsprechend eingerichteten Labor, da ein Referenzdruck vorgegeben werden muss. Dazu muss der Prozess, in dem das Druckmesssystem installiert ist, typischerweise unterbrochen und geöffnet werden, da der Prozessanschluss herkömmlicherweise fest mit dem Druckmessgerät verbunden ist.

Es besteht daher auch der Wunsch, ein Druckmessgerät von einem Druckmittler trennen und wieder verbinden zu können, um das Messgerät kalibrieren zu können, ohne den Prozess herunterfahren und öffnen zu müssen.

Im Stand der Technik sind hierfür beispielsweise trennbare hydraulische Verbindungen nach Art einer Axialsteckkupplung, wie beispielsweise aus dem Landmaschinenbau bekannt, vorgesehen. Die EP 3 126 793 B1 zeigt beispielhaft eine derartige Axialstecckupplung.

Bei derartigen Axialsteckkupplungen wird beim Trennen und Verbinden der Kupplung Hydraulikflüssigkeit in Richtung der angeschlossenen Hydraulikleitungen verschoben. Da Hydraulikflüssigkeit näherungsweise inkompressibel lässt, erfordert dies ein entsprechend der Verschiebung dimensioniertes Ausgleichsvolumen für die Hydraulikflüssigkeit, um Leckagen oder Beschädigungen des hydraulischen Systems zu vermeiden. Gleichwohl ist es bei Axialsteckkupplungen unvermeidbar, dass zumindest geringe Mengen Hydraulikflüssigkeit verloren gehen können, wenn die Kupplung geöffnet oder geschlossen wird.

Derartige Ausgleichsvolumina stehen bei elektronischen Druckmessgeräten jedoch nicht zur Verfügung, da sich das Sensorelement zur Druckmessung, z.B. ein piezoresistiver Sensor, nur minimal unter Druck verformt und deshalb die Messgeräteseite kein zusätzliches Volumen aufnehmen kann. Bei einer zwangsweisen Verschiebung von Hydraulikflüssigkeit in Richtung Druckmittler entsteht eine Vakuumblase auf der Messgeräteseite, die das Messgerät beschädigen kann.

Zudem ist es wünschenswert, dass in Druckmittlersystemen die Menge an Hydraulikflüssigkeit möglichst gering gehalten wird, um den Einfluss der Umgebungstemperatur auf das Messsignal gering zu halten.

Aufgrund der geringen Menge an Hydraulikflüssigkeit kann aber auch ein Verlust einer geringen Menge an Hydraulikflüssigkeit infolge einer Verwendung einer Axialstecckupplung zu einer Veränderung der Messeigenschaften des Druckmesssystems führen. Ein solcher Verlust von Hydraulikflüssigkeit ist eine unvermeidbare Folge des Öffnens und Schließens der Kupplung, was axiale Bewegungen von Schlussorganen der Axialsteckkupplung verlangt, die aber wiederum zu einer axialen Verschiebung von Hydraulikflüssigkeit führen. Solche axiale Verschiebungen von Hydraulikflüssigkeit bedingen schließlich einen zumindest geringen Verlust von Hydraulikflüssigkeit.

Aus dem Stand der Technik gemäß EP 2 753 906 B1 ist ferner ein hydraulisches System bekannt, bei dem eine Trennung mittels zweier Flüssigkeitsräume durch eine Doppelmembran erfolgt, bei der eine Membran den Flüssigkeitsraum zum Messgerät und die andere Membran den Raum zum Druckmittler verschließt. Im verbundenen Zustand wird der Druck von der Druckmittlermembran durch den ersten Flüssigkeitsraum zu den beiden Trennmembranen und dann von der zweiten Trennmembran zum Sensorelement geleitet. Derartige Doppelmembransysteme erfordern jedoch viel Platz und führen zu einer Erhöhung des Messfehlers durch die Membranbewegungen bei Temperaturschwankungen sowie durch die Druckübertragung durch zwei Membranen hindurch, insbesondere wenn deren Passform zueinander nicht optimal ist oder Verschmutzungen erfolgt sind. Zudem ist dieses Prinzip nachteilig, da eine Unterdruckmessung nicht möglich ist.

Aus US 9 899 108 B2 ist ferner ein Verfahren zum Verlegen einer Fernleitung durch ein Rohr bekannt. Dieses Verfahren erfordert jedoch das Füllen vor Ort und ist nur für die einmalige Verbindung geeignet. Ein Trennen der Fernleitung ohne Flüssigkeitsverlust ist nicht möglich.

Aus DE 10 2019 125 272 A1 ist ferner ein Druckmesssystem mit einem Druckmess-Einwegartikel bekannt, mittels dem ein Druckmessgerät unter Verwendung einer Druckmittlermembran an einer ein Prozessmedium führenden Leitung angeschlossen werden kann. Dabei wird eine hohle Nadel am Druckmessgerät in einen Kanal des Druckmittlers gestochen, damit eine Hydraulikflüssigkeit den Prozessdruck an das Druckmessgerät übertragen kann. Allerdings ist im offenen Zustand des Druckmesssystems mindestens eine Seite, beispielsweise die des Druckmessgeräts und/oder des Druckmittlers, zur Atmosphäre hin offen. Oftmals sollen aber Druckmittlersysteme mit einem definierten Vordruck gefüllt sein, um bestmögliche Messeigenschaften erzielen zu können. Ein solcher Vordruck darf daher in derartigen Fällen nicht verloren gehen. Daher eignen sich derartige Druckmesssysteme nur bedingt für diese Anwendungsfälle.

Aus US 7,258,017 B1 ist ferner ein trennbares hydraulisches System bekannt, welches zwar den Verlust an Hydraulikflüssigkeit beim Öffnen und Schließen des Systems zu minimieren versucht, gleichwohl einen solchen Verlust aber in Kauf nimmt.

Schließlich ist aus DE 10 2009 015505 A1 ein gattungsgemäßes hydraulisches System bekannt, welches jedoch zum Trennen auseinandergeschraubt werden muss und außerdem auf möglichst große Querschnitte hin optimiert ist. Für eine Anwendung in Druckmesssystemen sind hingegen möglichst kleine Flüssigkeitsvolumina vorteilhaft.

Nach alledem liegt der Erfindung die Aufgabe zu Grunde, ein hydraulisches System derart auszubilden, dass Hydraulikleitungen, insbesondere für Druckmesssysteme, auf einfache Weise unter Druck getrennt und wieder verbunden werden können, ohne die Funktion des Systems nachteilig zu beeinflussen.

Die Erfindung löst diese Aufgabe mit den Merkmalen eines hydraulischen Systems gemäß Anspruch 1.

Das erfindungsgemäße hydraulische System weist ein erstes Teil auf, an das ein erster Hydraulikkanal zum Führen von Hydraulikflüssigkeit anschließbar ist, sowie ein zweites Teil auf, an das ein zweiter Hydraulikkanal zum Führen von Hydraulikflüssigkeit anschließbar ist. Das erste Teil und das zweite Teil sind derart wiederholbar trennbar und wieder miteinander verbindbar, dass im verbundenen Zustand, in dem das erste Teil und das zweite Teil miteinander verbunden sind, der erste Hydraulikkanal und der zweite Hydraulikkanal hydraulisch durchgängig miteinander verbunden sind. Demgegenüber sind im getrennten Zustand, in dem das erste Teil und das zweite Teil nicht miteinander verbunden, sondern voneinander getrennt sind, der erste Hydraulikkanal und der zweite Hydraulikkanal nicht miteinander verbunden, sondern voneinander getrennt. Dabei sind der erste Hydraulikkanal durch das erste Teil und der zweite Hydraulikkanal durch das zweite Teil von der Umgebung abgesperrt. Erfindungsgemäß sind das erste Teil und das zweite Teil derart ausgebildet, dass beim Wechseln des Zustands weder in den ersten Hydraulikkanal, noch in den zweiten Hydraulikkanal Hydraulikflüssigkeit verschoben wird.

Die Erfindung hat erkannt, dass durch die Vermeidung einer axialen Verschiebung von Hydraulikflüssigkeit ein Verlust von Hydraulikflüssigkeit verhindert werden kann.

Auf diese Weise kann erfindungsgemäß ein mehrfach trenn- und verbindbares hydraulisches System, insbesondere Druckmittlersystem, bereitgestellt werden, bei dem beim Trennen und Verbinden - auch unter Druck, insbesondere auch bei anliegendem Prozessdruck - keine Verschiebung und kein Verlust von Hydraulikflüssigkeit stattfindet. Dadurch erfordert dieses System keine Ausgleichsvolumina, wodurch das Volumen an Hydraulikflüssigkeit möglichst gering gehalten werden kann, so dass der Einfluss der Umgebungstemperatur sowie deren Änderung auf das Messsignal gering bleibt.

Die Erfindung sieht vor, dass im getrennten Zustand von erstem Teil und zweitem Teil das erste Teil den ersten Hydraulikkanal druckdicht verschließt, indem das erste verdrehbare Element einen im ersten Gehäuseteil angeordneten und mit dem ersten Hydraulikkanal verbundenen drehbaren Kanal endseitig absperrt. Zudem verschließt in diesem getrennten Zustand das zweite Teil den zweiten Hydraulikkanal druckdicht, indem das zweite verdrehbare Element einen im zweiten Gehäuseteil angeordneten und mit dem zweiten Hydraulikkanal verbundenen drehbaren Kanal endseitig absperrt. Das hydraulische System kann somit mittels der durch das erste Teil und das zweite Teil gebildeten Kupplung auch unter Druck stehend geöffnet und geschlossen werden.

Da es sich im verbundenen Zustand um ein geschlossenes hydraulisches System handelt, ermöglicht das erfindungsgemäße System zudem Unterdruckmessungen über die Hydraulikkanäle des Systems durchzuführen.

Das erste Teil und das zweite Teil lassen sich sehr kompakt ausbilden, so dass die sich aus beiden Teilen ergebende Kupplung eine kompakte Bauform erhalten kann, die vorteilhaft für eine Montage des erfindungsgemäßen hydraulischen Systems durch Rohre und/oder Wanddurchbrüche hindurch ist.

Erfindungsgemäß umfasst das erste Teil ein erstes Gehäuseteil, das ein erstes, gegenüber dem ersten Gehäuseteil um eine erste Drehachse verdrehbares Element mit einem für Hydraulikflüssigkeit durchgängigen ersten drehbaren Kanal aufweist. Entsprechend umfasst das zweite Teil ein zweites Gehäuseteil, das ein zweites, gegenüber dem zweiten Gehäuseteil um eine zweite Drehachse verdrehbares Element mit einem für Hydraulikflüssigkeit durchgängigen zweiten drehbaren Kanal aufweist.

Dabei sind im verbundenen Zustand von erstem Teil und zweitem Teil das erste verdrehbare Element und das zweite verdrehbare Element derart zusammengefügt, dass die erste Drehachse und die zweite Drehachse miteinander fluchten und so eine gemeinsame Drehachse für beide Elemente bilden und dass der erste drehbare Kanal hydraulisch durchgängig mit dem ersten Hydraulikkanal verbunden ist und der zweite drehbare Kanal hydraulisch durchgängig mit dem zweiten Hydraulikkanal verbunden ist und dass der erste drehbare Kanal und der zweite drehbare Kanal hydraulisch durchgängig miteinander verbunden sind.

Demgegenüber ist im getrennten Zustand von erstem Teil und zweitem Teil der erste drehbare Kanal hydraulisch gegen den ersten Hydraulikkanal und der zweite drehbare Kanal hydraulisch gegen den zweiten Hydraulikkanal abgesperrt.

Im verbundenen Zustand von erstem Teil und zweitem Teil bilden diese beiden Teile ein Gebilde, das im Wesentlichen rotationssymmetrisch ist und sich um eine gemeinsame Achse drehen lässt. Dabei entsteht im verbundenen Zustand eine hydraulisch durchgängige Verbindung zwischen beiden Hydraulikkanälen, während im getrennten Zustand die beiden verdrehbaren Elemente Absperrorgane darstellen.

Die Erfindung sieht ferner vor, dass im verbundenen Zustand von erstem Teil und zweitem Teil das erste verdrehbare Element mit dem zweiten Teil und/oder das zweite verdrehbare Element mit dem ersten Teil formschlüssig verbunden ist. Diese formschlüssige Verbindung sorgt dafür, dass die durch das erste Teil und das zweite Teil gebildete Kupplung geschlossen bleibt. Die formschlüssige Verbindung wird durch Verdrehen der beiden verdrehbaren Elemente geschlossen.

Eine Weiterbildung der Erfindung sieht vor, dass der erste drehbare Kanal und/oder der zweite drehbare Kanal jeweils als Durchgangsbohrung oder als zwei miteinander verbundene Teilbohrungen mit jeweils unterschiedlicher Ausrichtung ausgebildet sind. Durchgangsbohrungen sind vorteilhaft, um die Anzahl der Bearbeitungsschritte gering zu halten. Demgegenüber ist die Anordnung von zwei miteinander verbundenen Teilbohrungen vorteilhaft, da die Eintrittsöffnungen der Bohrungen in das jeweilige senkrecht oder im Wesentlichen senkrecht zur Oberfläche angesetzt werden können. Hierdurch lassen sich im Wesentlichen kreisförmige Eintrittsöffnungen ausbilden, was vorteilhaft für die Anbringung von etwaig vorgesehenen Dichtringen ist.

Gemäß einer Weiterbildung der Erfindung sind sowohl das erste, als auch das zweite verdrehbare Element jeweils als Teilzylinder, beispielsweise Halbzylinder ausgebildet, vorzugsweise mit darin ausgebildeten Ausnehmungen, wie Nuten, Fräsungen, Bohrungen, etc., oder daran ausgebildeten Ausstülpungen, wie Zapfen, etc.. Im verbundenen Zustand von erstem Teil und zweitem Teil sind beide Teilzylinder derart zusammengefügt, dass sie einen zweiteiligen Zylinder bilden, der um eine gemeinsame Drehachse verdrehbar ist, welche mit der ersten und der zweiten Drehachse zusammenfällt. Neben einer vorteilhaften Ausgestaltung der beiden Teilzylinder als Halbzylinder sind aber auch Ausgestaltungen möglich, bei denen ein Teilzylinder größer ist als der andere. Gleichwohl bilden beide Teilzylinder im verbundenen Zustand ein Gebilde, das einem einzigen zweiteiligen Zylinder entspricht.

Eine Weiterbildung der Erfindung sieht vor, dass sowohl das erste, als auch das zweite verdrehbare Element jeweils Teilkugeln, beispielsweise Halbkugeln, oder jeweils einen Teil eines Rotationskörpers, beispielsweise halben Rotationskörper, ausweisen, vorzugsweise mit darin ausgebildeten Ausnehmungen, wie Nuten, Fräsungen, Bohrungen, etc., oder daran ausgebildeten Ausstülpungen, wie Zapfen, etc.. Die Oberfläche eines solchen Rotationskörpers wird durch Rotation einer erzeugenden Kurve um eine Rotationsachse gebildet. Die erzeugende Kurve ist beispielsweise ein Kreisbogen, Ellipsenbogen oder eine andere vordefinierte Kurvenform. Die erzeugende Kurve ist vorzugsweise symmetrisch zu einer diese Kurve in ihrer Mitte senkrecht schneidenden Linie oder Ebene.

Der Rotationskörper weist vorzugsweise zwei einander gegenüberliegende flache Stirnseiten auf, die senkrecht zu einer Ebene liegen, die den Rotationskörper in zwei Teile teilt.

Der Rotationskörper weist vorzugsweise die Grundform eines Fasses auf - mit zwei einander gegenüberliegenden flachen Stirnseiten.

Ein halber Rotationskörper entsteht durch Halbierung des Rotationskörpers entlang einer Ebene, in welcher die Rotationsachse des Rotationskörpers liegt.

Im verbundenen Zustand von erstem Teil und zweitem Teil sind beide Teilkugeln bzw. beide Teile des Rotationskörpers derart zusammengefügt, dass sie eine zweiteilige Kugel bzw. einen zweiteiligen Rotationskörper bilden, die/der um die erste Drehachse und die zweite Drehachse verdrehbar ist. Diese beiden Drehachsen fallen dabei zusammen und bilden eine gemeinsame Drehachse. Die Ausgestaltung als zweiteiliger Rotationskörper ist vorteilhaft zur Anbringung je eines Lagerzapfens (Achszapfen) an den flachen Stirnseiten jedes Teils des Rotationskörpers.

Gemäß einer Weiterbildung der Erfindung weist das erste verdrehbare Element einen ersten Achszapfen auf, der um die erste Drehachse herum angeordnet ist und sich nur aus einer Seite des ersten verdrehbaren Elements heraus erstreckt und im ersten Gehäuseteil gelagert ist. In entsprechender Weise weist das zweite verdrehbare Element einen zweiten Achszapfen auf, der um die zweite Drehachse herum angeordnet ist und sich nur aus einer Seite des zweiten verdrehbaren Elements heraus erstreckt und im zweiten Gehäuseteil gelagert ist. Im verbundenen Zustand von erstem Teil und zweitem Teil bilden diesen beiden Seiten unterschiedliche, einander gegenüberliegende, jedoch durch das erste und zweite verdrehbare Element voneinander beabstandete Seiten, an denen jeweils einer der Achszapfen angeordnet ist.

Gemäß einer Weiterbildung der Erfindung weist das erste verdrehbare Element an zwei seiner senkrecht zur ersten Drehachse angeordneten Flächen jeweils eine Ringnut entlang jeweils eines Kreisbogens auf, dessen Mittelpunkt auf der ersten Drehachse liegt. Dabei greift in die eine Ringnut ein am ersten Teil vorgesehener Steg ein, der entlang eines Kreisbogens verläuft, dessen Mittelpunkt ebenfalls auf der ersten Drehachse liegt. In die andere Ringnut greift ein am zweiten Teil vorgesehener Steg ein, der entlang eines Kreisbogens verläuft, dessen Mittelpunkt auf der zweiten Drehachse liegt.

Zusätzlich oder alternativ weist das zweite verdrehbare Element an zwei seiner senkrecht zur zweiten Drehachse angeordneten Flächen jeweils eine Ringnut entlang jeweils eines Kreisbogens auf, dessen Mittelpunkt auf der zweiten Drehachse liegt. Dabei greift in die eine Ringnut ein am zweiten Teil vorgesehener Steg ein, der entlang eines Kreisbogens verläuft, dessen Mittelpunkt ebenfalls auf der zweiten Drehachse liegt. In die andere Ringnut greift ein am ersten Teil vorgesehener Steg ein, der entlang eines Kreisbogens verläuft, dessen Mittelpunkt auf der ersten Drehachse liegt.

Diese Weiterbildung bzw. Weiterbildungen ermöglichen eine einfach herzustellende formschlüssige Verbindung der beiden verdrehbaren Elemente, wenn sie in eine dem verbundenen Zustand entsprechende Position gedreht sind. Durch Verdrehen der verdrehbaren Elemente in eine dem getrennten Zustand entsprechende Position wird die formschlüssige Verbindung gelöst.

Gemäß einer Weiterbildung der Erfindung ist der am zweiten Teil vorgesehene Steg an einer mit dem zweiten Teil verschraubten Platte vorgesehen. Zusätzlich oder alternativ ist der am ersten Teil vorgesehene Steg an einer mit dem ersten Teil verschraubten Platte vorgesehen. Die Bereitstellung solcher anschraubbaren Platten gestattet einen einfachen Zusammenbau des ersten Teils sowie des zweiten Teils des hydraulischen Systems.

Gemäß einer Weiterbildung der Erfindung ist an dem ersten Hydraulikkanal ein Druckmessgerät angeschlossen. Ferner ist an dem zweiten Hydraulikkanal ein Druckmittler angeschlossen. Dabei überträgt im verbundenen Zustand von erstem Teil und zweitem Teil die Hydraulikflüssigkeit in den Hydraulikkanälen einen hydraulischen Druck vom Druckmittler zum Druckmessgerät. Die Erfindung kann aber auch in anderen Bereichen eingesetzt werden, beispielsweise im Bereich von Baumaschinen oder landwirtschaftlichen Maschinen, bei denen gelegentlich hydraulische Leitungen geöffnet und wieder geschlossen werden müssen, beispielsweise wenn eine Baggerschaufel an einem Bagger gewechselt wird.

Eine Weiterbildung der Erfindung sieht vor, dass das erste verdrehbare Element und/oder das zweite verdrehbare Element nur mittels eines abnehmbaren Handgriffs oder mittels eines Werkzeugs, wie z.B. einem Schraubendreher oder einem Innensechskantschlüssel, verdrehbar ist. Hierdurch wird eine Sicherung der Verbindung der von erstem Teil und zweitem Teil gebildeten Kupplung im verbundenen Zustand gegen ein unbeabsichtigtes Öffnen erzielt.

Gemäß einer Weiterbildung der Erfindung weist das erste und/oder das zweite verdrehbare Element, beispielsweise an seinem jeweiligen Achszapfen, eine Aufnahmekontur zur Aufnahme des Handgriffs bzw. des Werkzeugs auf. Die Aufnahmekontur kann beispielsweise ein Innensechskant, ein Schlitz, ein Kreuzschlitz oder jede andere geometrische Form aufweisen.

Eine Weiterbildung der Erfindung sieht vor, dass das hydraulische System eine Schutzkappe für das erste Teil umfasst, mit der im getrennten Zustand von erstem Teil und zweitem Teil das erste Teil verschlossen werden kann. Zusätzlich oder alternativ ist eine Schutzkappe für das zweite Teil vorgesehen, mit der im getrennten Zustand vom ersten und zweiten Teil das zweite Teil verschlossen werden kann. Mittels derartiger Schutzkappen können die beiden Teile, welche die Kupplung des hydraulischen Systems bilden, vor Verschmutzung und Beschädigung geschützt werden.

Gemäß einer Weiterbildung der Erfindung umfasst die Schutzkappe für das erste Teil ein Schutzkappengehäuseteil, das ein gegenüber dem Schutzkappengehäuseteil um eine Drehachse des Schutzkappengehäuseteils verdrehbares Element aufweist. Dabei sind im verbundenen Zustand von erstem Teil und Schutzkappengehäuseteil das erste verdrehbare Element des ersten Teils und das verdrehbare Element des Schutzkappengehäuseteils derart zusammengefügt, dass die erste Drehachse des ersten Teils und die Drehachse des Schutzkappengehäuseteils miteinander fluchten. Außerdem ist dann der erste drehbare Kanal des ersten verdrehbaren Elements hydraulisch durchgängig mit einem weiteren Kanal im verdrehbaren Element des Schutzkappengehäuseteils verbunden. Dieser weitere Kanal führt zu einer Ausgleichskammer im Schutzkappengehäuseteil, die mit einer Hydraulikflüssigkeit gefüllt ist und mit einer Ausdehnungsmembran abgeschlossen ist. Die Schutzkappe für das erste Teil eignet sich in einem Druckmesssystem besonders vorteilhaft für dasjenige Teil (vorzugsweise das erste Teil), das mit dem Hydraulikkanal verbunden ist, der zu einem Druckmessgerät führt.

Weiterbildungen der Erfindung ergeben sich aus den Ansprüchen, der Beschreibung und den Zeichnungen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

In der Zeichnung zeigen:
- Fig. 1: eine vereinfachte Prinzipdarstellung eines erfindungsgemäßen Ausführungsbeispiels eines trennbaren hydraulischen Systems in Form einer Schnellkupplung mit zylindrischem Drehschieber in einer perspektivischen Explosionsansicht von vorne rechts,
- Fig. 2: das System gemäß Fig. 1 in einer weiteren Explosionsansicht von hinten links,
- Fig. 3: das System gemäß Fig. 1 im zusammengebauten, jedoch getrennten Zustand von erstem, oberen Teil und zweitem, unteren Teil in einer perspektivischen Ansicht von vorne links,
- Fig. 4: das System gemäß Fig. 3, wobei das erste Teil und das zweite Teil aufeinandergesetzt sind,
- Fig. 5: das System gemäß Fig. 4 im verbundenen Zustand, in dem ein erster Hydraulikkanal am ersten Teil mit einem zweiten Hydraulikkanal am zweiten Teil hydraulisch durchgängig miteinander verbunden sind,
- Fig. 6: eine Darstellung des in den Figuren 1 und 2 gezeigten Systems in einer Seitenansicht zur Veranschaulichung der Schnittebene A-A in den Figuren 7 bis 9,
- Fig. 7: das System gemäß Fig. 3 in einer Schnittansicht gemäß der in Fig. 6 dargestellten Schnittebene A-A,
- Fig. 8: das System gemäß Fig. 4 in einer Schnittansicht gemäß der in Fig. 6 dargestellten Schnittebene A-A,
- Fig. 9: das System gemäß Fig. 5 in einer Schnittansicht gemäß der in Fig. 6 dargestellten Schnittebene A-A,
- Fig. 10: den in den Figuren 1 und 2 dargestellten Drehschieber mit zylindrischer Grundform,
- Fig. 11: eine alternative Ausgestaltung des in Fig. 10 dargestellten Drehschiebers mit nicht-zylindrischer, sondern rotationssymmetrischer, nämlich fassartiger Grundform,
- Fig. 12: eine alternative Ausgestaltung des in Fig. 10 dargestellten Drehschieber mit nicht-zylindrischer, sondern rotationssymmetrischer, nämlich kugelschichtartiger Grundform,
- Fig. 13: das in den Figuren 1 bis 9 dargestellte erste, obere Teil mit einer Schutzkappe in Seitenansicht gemäß einem weiteren Ausführungsbeispiel der Erfindung,
- Fig. 14: das in Fig. 13 dargestellte System in einer Schnittdarstellung entlang der in Fig. 13 dargestellten Schnittebene A-A,
- Fig. 15: ein konstruktives Ausführungsbeispiel eines trennbaren hydraulischen Systems gemäß der Erfindung im zusammengebauten, jedoch getrennten Zustand von erstem Teil, oberen und zweitem, unteren Teil in einer Seitenansicht von hinten,
- Fig. 16: das System gemäß Fig. 15, wobei das erste Teil und das zweite Teil aufeinandergesetzt sind,
- Fig. 17: das System gemäß Fig. 15 im verbundenen Zustand, in dem ein erster Hydraulikkanal des ersten Teils mit einem zweiten Hydraulikkanal des zweiten Teils hydraulisch durchgängig miteinander verbunden sind,
- Fig. 18: ein konstruktives Ausführungsbeispiel des insbesondere in den Figuren 1 und 2 sowie 10 dargestellten Drehschiebers nebst Gehäuseteilen mit zylindrischer Grundform und Ringnut zur formschlüssigen Verbindung von erstem Teil und zweitem Teil in einer perspektivischen Explosionsansicht,
- Fig. 19: den in Fig. 18 dargestellten Drehschieber im aufeinandergesetzten Zustand nebst Gehäuseteilen,
- Fig. 20: den in Fig. 19 dargestellten Drehschieber nebst Gehäuseteilen, wobei die Ringnut des unteren verdrehbaren Elements in Eingriff mit einem korrespondierenden Gehäuseteil steht,
- Fig. 21: den in Fig. 20 dargestellten Drehschieber nebst Gehäuseteilen mit im Uhrzeigersinn verdrehten Drehschieber zur Erreichung des verbundenen Zustands, in dem das erste, obere Teil des hydraulischen Systems mit dem zweiten, unteren Teil des hydraulischen Systems verbunden ist, wobei aus Darstellungsgründen die Gehäuseteile des oberen Teils abgesetzt dargestellt sind,
- Fig. 22: den in Fig. 21 dargestellten Drehschieber, wobei die Gehäuseteile des oberen Teils in ihrer funktionsgemäßen Position dargestellt sind.

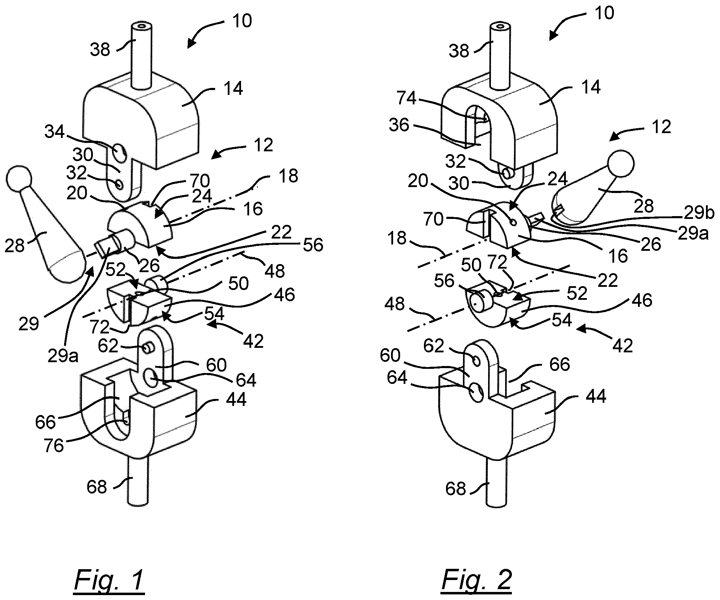

Fig. 1 und Fig. 2 zeigen ein Ausführungsbeispiel eines erfindungsgemäßen trennbaren hydraulischen Systems 10 in einer vereinfachten Prinzipdarstellung. Ein erstes Teil 12 des hydraulischen Systems umfasst ein erstes Gehäuseteil 14, in dem ein erstes verdrehbares Element 16 verdrehbar um eine erste Drehachse 18 angeordnet ist. Das erste verdrehbare Element 16 weist einen ersten drehbaren Kanal 20 auf, der von einer Stirnseite 22 des ersten verdrehbaren Elements 16 bis zu einer auf einer Umfangsfläche 24 des ersten verdrehbaren Element 16 reicht und das erste verdrehbare Element 16 vollständig durchdringt.

Ein erster Achszapfen 26 ist an dem ersten verdrehbaren Element 16 angeordnet, wobei die Mittellinie des ersten Achszapfens 26 mit der ersten Drehachse 18 fluchtet.

An dem ersten Achszapfen 26 ist ferner ein, insbesondere abnehmbarer, Handgriff 28 angeordnet, mit dem das erste verdrehbare Element 16 verdreht werden kann. Der erste Achszapfen 26 und der Handgriff 28 sind vorzugsweise über eine formschlüssige Verbindung 29 lösbar miteinander verbindbar. Diese formschlüssige Verbindung weist im dargestellten Ausführungsbeispiel einen Steg 29a und eine Nut 29b auf, die zur Aufnahme des Stegs 29a vorgesehen ist.

Das erste Gehäuseteil 14 weist eine erste Zunge 30 mit einem in Richtung des Inneren des ersten Gehäuseteils 14 gerichteten Vorsprung 32, insbesondere Stift, auf. Ferner weist das erste Gehäuseteil 14 im Bereich des Anfangs der ersten Zunge 30 eine Lagerbohrung 34 für den ersten Achszapfen 26 auf.

Das erste Gehäuseteil 14 weist eine Ausnehmung 36 auf, deren Kontur der Kontur der ersten Zunge 30 entspricht.

Das erste Gehäuseteil 14 umfasst ferner einen Anschluss 38 für einen Hydraulikkanal. Ein nicht dargestellter Kanal durchdringt den Anschluss 38 in seiner Längsrichtung und führt von seinem oberen Ende bis in das Innere des ersten Gehäuseteils 14.

Ein zweites Teil 42 des hydraulischen Systems 10 umfasst ein zweites Gehäuseteil 44, in dem ein zweites verdrehbares Element 46 verdrehbar um eine zweite Drehachse 48 angeordnet ist. Das zweite verdrehbare Element 46 weist einen zweiten drehbaren Kanal 50 auf, der von einer Stirnseite 52 des zweiten verdrehbaren Elements 46 bis zu einer Umfangsfläche 54 des zweiten verdrehbaren Elements 46 reicht und das verdrehbare Element 46 vollständig durchdringt.

Ein zweiter Achszapfen 56 ist an dem zweiten verdrehbaren Element 46 angeordnet, wobei die Mittelinie des zweiten Achszapfens 56 mit der zweiten Drehachse 48 fluchtet.

Das zweite Gehäuseteil 44 weist eine zweite Zunge 60 mit einem in Richtung des Inneren des zweiten Gehäuseteils 44 gerichteten Vorsprung 62, insbesondere einem Stift, auf. Ferner weist das zweite Gehäuseteil 44 im Bereich des Anfangs der zweiten Zunge 60 eine Lagerbohrung 64 für den zweiten Achszapfen 56 auf.

Das zweite Gehäuseteil 44 weist eine Ausnehmung 66 auf, deren Kontur der Kontur der ersten Zunge 30 sowie der Kontur der zweiten Zunge 60 entspricht. In analoger Weise entspricht die Kontur der Ausnehmung 36 der Kontur der zweiten Zunge 60. Damit ist gewährleistet, dass im verbundenen Zustand, in dem das erste Teil 12 und das zweite Teil 42 miteinander verbunden sind, die Zunge des einen Teils in die Ausnehmung des jeweils anderen Teils formschlüssig eingreift.

Das zweite Gehäuseteil 44 umfasst ebenfalls einen Anschluss 68 für einen Hydraulikkanal. Ein nicht dargestellter Kanal durchdringt den Anschluss 68 in seiner Längsrichtung und führt von seinem unteren Ende bis in das Innere des zweiten Gehäuseteils 44.

Am ersten verdrehbaren Element 16 ist eine radial verlaufende erste Nut 70 vorgesehen. Am zweiten verdrehbaren Element 46 ist eine radial verlaufende zweite Nut 72 vorgesehen.

Im inneren Bereich des ersten Gehäuseteils 14 ist eine dritte Nut 74 vorgesehen. Im inneren Bereich des zweiten Gehäuseteils 44 ist eine vierte Nut 76 vorgesehen.

In der in den Figuren 1 und 2 dargestellten Stellung des ersten verdrehbaren Elements 16 sowie des zweiten verdrehbaren Elements 46 fluchten die erste Nut 70 und die dritten Nut 74 einerseits sowie die zweite Nut 72 und die vierte Nut 76 andererseits.

Im verbundenen Zustand von erstem Teil 12 und zweitem Teil 42 befindet sich der erste Achszapfen 26 in der Lagerbohrung 34, der zweite Achszapfen 56 in der Lagerbohrung 64 und der erste Vorsprung bzw. Stift 32 befindet sich in der vierten Nut 76, während sich der zweite Vorsprung bzw. Stift 62 in der dritten Nut 74 befindet.

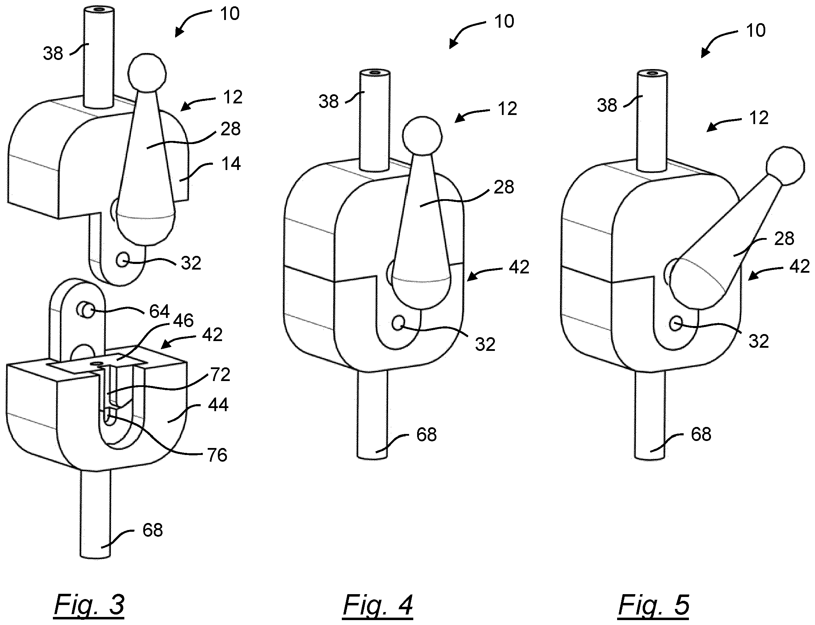

Fig. 3 zeigt den zusammengebauten, jedoch getrennten Zustand von oberem, ersten Teil 12 und unterem, zweiten Teil 14. D.h. das erste verdrehbare Element 16 befindet sich im ersten Gehäuseteil 14 und das zweite verdrehbare Element 46 befindet sich im zweiten Gehäuseteil 44. Die zweite Nut 72 fluchtet mit der vierten Nut 76. In entsprechender Weise fluchtet die (in Fig. 3 nicht sichtbare) erste Nut 70 mit der dritten Nut 74 im ersten Teil 12.

Fig. 4 zeigt einen Zustand, in dem das erste Teil 12 und das zweite Teil 42 aufeinander gesetzt sind. Der Griff 28 befindet sich jedoch in der gleichen Stellung, wie in den Figuren 1 bis 3 dargestellt. In dieser Stellung ist der Anschluss 38 gegen den ersten drehbaren Kanal 20 abgesperrt. Ebenso ist in dieser Stellung der Anschluss 68 gegen den zweiten drehbaren Kanal 50 abgesperrt. Die Figuren 1 bis 4 veranschaulichen somit den getrennten Zustand, in dem der sich am Anschluss 38 anschließende erste Hydraulikkanal nicht mit dem sich am Anschluss 68 anschließenden zweiten Hydraulikkanal verbunden ist. Vielmehr sind die beiden Hydraulikkanäle in diesem Zustand voneinander getrennt. Außerdem sind diese Hydraulikkanäle durch das erste Teil 12 sowie das zweite Teil 32 von der Umgebung abgesperrt.

Fig. 5 zeigt das trennbare hydraulische System im verbundenen Zustand. Ein am Anschluss 38 angeschlossener Hydraulikkanal (nicht dargestellt) ist in diesem Zustand mit einem am Anschluss 68 angeschlossenen Hydraulikkanal (ebenfalls nicht dargestellt) hydraulisch durchgängig verbunden.

Der Handgriff 28 ist dabei gegenüber der in den in den Figuren 1 bis 4 dargestellten Position um etwa 45° verdreht, so dass der erste drehbare Kanal 20 und der zweite drehbare Kanal 50 hydraulisch durchgängig mit den das erste Gehäuseteil 14 und das zweite Gehäuseteil 44 sowie den die Anschlüsse 38 und 68 durchdringenden Kanälen verbunden ist.

D.h. in diesem verbundenen Zustand sind der Kanal durch den Anschluss 38 für einen Hydraulikkanal und das erste Gehäuseteil 14, der drehbare Kanal 20 durch das erste verdrehbare Element 16, der drehbare Kanal 50 durch das zweite verdrehbare Element 46 und der Kanal durch den Anschluss 68 für einen Hydraulikkanal und das zweite Gehäuseteil 44 miteinander verbunden, so dass ein hydraulischer Druck und ggf. ein Volumenstrom vom Anschluss 38 zum Anschluss 68 geführt werden kann.

Im getrennten Zustand von erstem Teil 12 und zweitem Teil 42 gemäß der in den Figuren 1 bis 4 dargestellten Stellung des Handgriffs 28 befinden sich hingegen das erste verdrehbare Element 16 und das zweite verdrehbare Element 46 in der in Fig. 1 dargestellten Ausrichtung, beispielsweise mit horizontaler Ausrichtung der Stirnseite 22 des ersten verdrehbaren Elements 16 und der Stirnseite 52 des zweiten verdrehbaren Elements 46, in der das erste verdrehbare Element 16 den Kanal durch das erste Gehäuseteil 14 und den Anschluss 38 druckdicht verschließt und zudem das zweite verdrehbare Element 46 den Kanal durch das zweite Gehäuseteil 44 und den Anschluss 68 druckdicht verschließt.

In diesem getrennten Zustand sind das erste Teil 12 und das zweite Teil 42 nicht miteinander verbunden, sondern sie sind voneinander getrennt, so dass das hydraulische System 10 in zwei Abschnitte aufgeteilt ist, die jeweils druckdicht verschlossen sind.

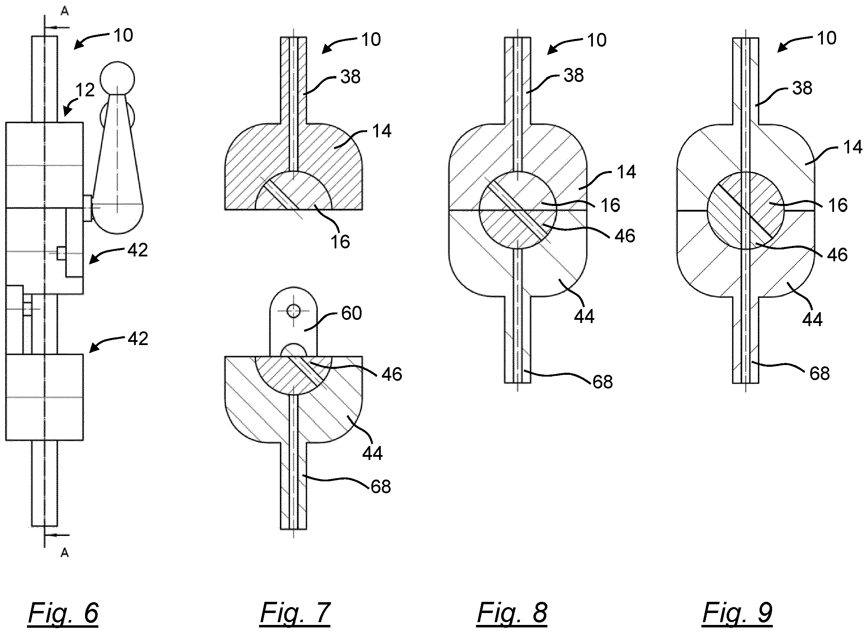

Die Figuren 6 bis 9 dienen zur Veranschaulichung des getrennten Zustandes sowie des verbundenen Zustandes.

Fig. 6 dient dabei lediglich zur Veranschaulichung der Schnittdarstellungen der Figuren 7 bis 9, nämlich gemäß der Schnittebene A-A. Daher ist in Fig. 6 das zweite Teil 42 doppelt dargestellt, obwohl es bei einer technischen Realisierung lediglich einfach vorhanden ist. Die untere Darstellung des zweiten Teils 42 dient zur Erklärung der Schnittdarstellung gemäß Fig. 7. Die obere Darstellung des zweiten Teils 42 in Fig. 6 dient zur Erklärung der Schnittdarstellung gemäß den Figuren 8 und 9.

Im Übrigen entspricht der in Fig. 7 dargestellte Zustand dem in Fig. 3 dargestellten Zustand. Analog entspricht der in Fig. 8 dargestellte Zustand dem in Fig. 4 dargestellten Zustand. Ferner entspricht der in Fig. 9 dargestellte Zustand dem in Fig. 5 dargestellten Zustand.

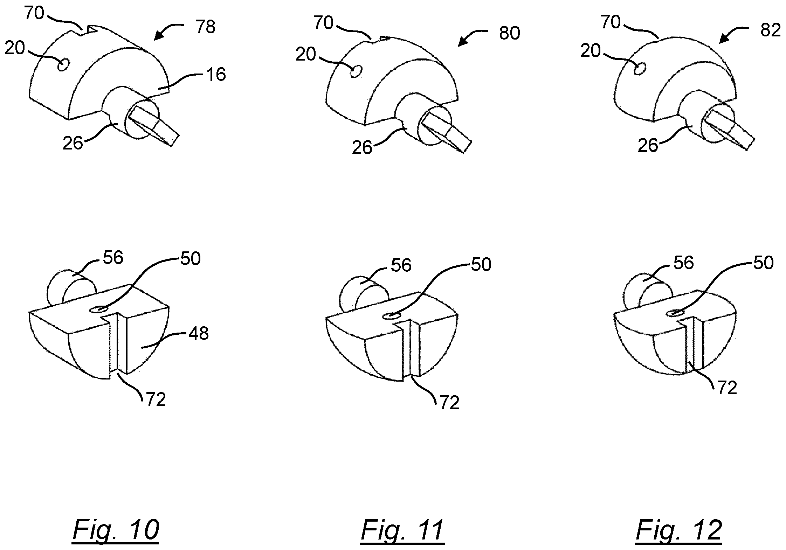

Figuren 10 bis 12 veranschaulichen verschiedene Grundformen des aus erstem verdrehbaren Element 16 und zweitem verdrehbaren Element 46 gebildeten Drehschiebers 78, 80, 82.

Fig. 10 stellt den Drehschieber 78 mit zylindrischer Grundform dar, wie er anhand der Figuren 1 bis 9 erläutert wurde.

Das erste verdrehbare Element 16 und das zweite verdrehbare Element 46 weisen jeweils die Grundform eines Halbzylinders auf, so dass sie im verbundenen Zustand die Grundform eines zweiteiligen Vollzylinders bilden.

In einer alternativen (nicht dargestellten) Ausführung handelt es sich um zwei ungleiche Teilzylinder, die aber ebenfalls im verbundenen Zustand einen zweiteiligen Vollzylinder bilden.

Fig. 11 stellt eine alternative Formgebung des Drehschiebers 80 mit nicht-zylindrischer Grundform, sondern fassartiger Grundform dar. Die bauchige oder ballige Grundform des Drehschiebers 80 ist zwar rotationssymmetrisch. Sie folgt jedoch nicht notwendigerweise einer einfachen geometrischen Fig., wie einer Kugel oder eines Ellipsoids.

Die Grundform kann sich hierbei durch Rotation eines gekrümmten Kurvenabschnitts beliebiger Form ergeben.

Fig. 12 stellt eine weitere alternative Formgebung des Drehschiebers 82 mit kugelartiger rotationssymmetrischer Grundform dar, nämlich einer Grundform, die einer Kugelschicht entspricht, die symmetrisch zum Kugeläquator ausgebildet ist.

Bei einer möglichen Ausgestaltung der Drehschieber 80 bzw. 82 gemäß den Figuren 11 und 12 sind jeweils das erste Gehäuseteil und das zweite Gehäuseteil im Inneren an die Formgebung der verdrehbaren Elemente angepasst. Die Gehäuseteile umschmiegen dabei die verdrehbaren Elemente in analoger Weise, wie dies bei dem Ausführungsbeispiel gemäß den Figuren 1 bis 10 der Fall ist. Die Erfindung ist jedoch nicht auf eine derartige Anpassung der Formgebung beschränkt. Erfindungsgemäß ist jedoch vorgesehen, dass die das erste Gehäuseteil und das zweite Gehäuseteil durchdringenden Kanäle an ihren dem Drehschieber 78, 80, 82 zugewandten Enden mittels des Drehschiebers 78, 80, 82 gegenüber der Umgebung derart gedichtet sind, um einen Austritt von Hydraulikflüssigkeit am Drehschieber 78, 80, 82 vorbei in die Umgebung zu verhindern. Die Führung des Drehschiebers 78, 80, 82 erfolgt über die Achszapfen 26, 56.

Wie sich aus den Figuren 10 bis 12 ergibt, sind die rotationssymmetrischen Grundformen ergänzt durch Ausnehmungen und Vorsprünge, wie Nuten 70, 72, Kanäle 20, 50 und Achszapfen 26, 56. Die jeweilige Grundform bleibt hierbei jedoch erhalten.

Bauchige oder kugelige Grundformen sind vorteilhaft im Hinblick auf die Anbringung von Dichtungen, insbesondere O-Ring Dichtungen im Bereich der Öffnungen zu den Kanälen, die jeweils durch das erste Gehäuseteil und das zweite Gehäuseteil führen.

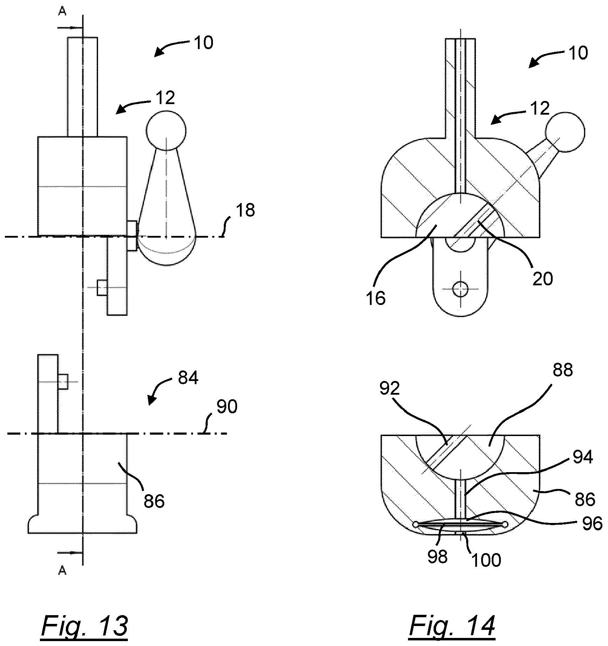

Figuren 13 und 14 zeigen das zuvor beschriebene trennbare hydraulische System 10 mit einer Schutzkappe 84 für das erste Teil 12. Eine derartige Schutzkappe 84 kommt zum Einsatz im getrennten Zustand von erstem Teil 12 und zweitem Teil 42 und wird auf das erste Teil 12 oder zweite Teil 42 aufgesetzt und mit diesem Teil in analoger Weise verbunden, wie vorstehend beschrieben. Die Schutzkappe weist allerdings keinen Anschluss für einen Hydraulikkanal auf.

Die Schutzkappe 84 weist ein Schutzkappengehäuseteil 86 auf, das ein verdrehbares Element 88 aufweist. Dieses verdrehbare Element 88 entspricht vorzugsweise dem anhand der Figuren 1 bis 12 dargestellten jeweiligen unteren verdrehbaren Element.

Im verbundenen Zustand vom ersten Teil 12 und Schutzkappengehäuseteil 86 sind das erste verdrehbare Element 16 des ersten Teils 12 und das verdrehbare Element 88 des Schutzkappengehäuseteils 86 derart zusammengefügt, dass die Drehachse 18 des ersten Teils 12 und die Drehachse 90 des Schutzkappengehäuseteils 86 miteinander fluchten. Dabei ist der erste drehbare Kanal 20 des ersten verdrehbaren Element 16 hydraulisch durchgängig mit einem drehbaren Kanal 92 im verdrehbaren Element 88 des Schutzkappengehäuseteils 86 verbunden. In diesem Zustand ist der Kanal 92 mit einem Kanal 94 im Schutzkappengehäuseteil 86 verbunden, der zu einer Ausgleichskammer 96 im Schutzkappengehäuseteil 86 führt, die mit Hydraulikflüssigkeit gefüllt und mit einer Ausdehnungsmembran 98 abgeschlossen ist. Auf der der Hydraulikflüssigkeit abgewandten Seite der Ausdehnungsmembran 98 befindet sich eine Öffnung 100 zur Atmosphäre.

Eine derartige spezielle Schutzkappe ist vorteilhaft bei folgender Anwendung: Ist an dem ersten Teil 12 beispielsweise ein Druckmessgerät angeschlossen, und wird der weiterhin mit Hydraulikflüssigkeit gefüllte Hydraulikkanal zum Druckmessgerät mit einer Schutzkappe verschlossen, gewährleistet die oben beschriebene Schutzkappe 84, dass im Falle von beispielsweise temperaturbedingten Volumenänderungen der Hydraulikflüssigkeit das Messgerät nicht beschädigt wird, da derartige Volumenänderungen von der Ausdehnungsmembran 98 abgefangen würden.

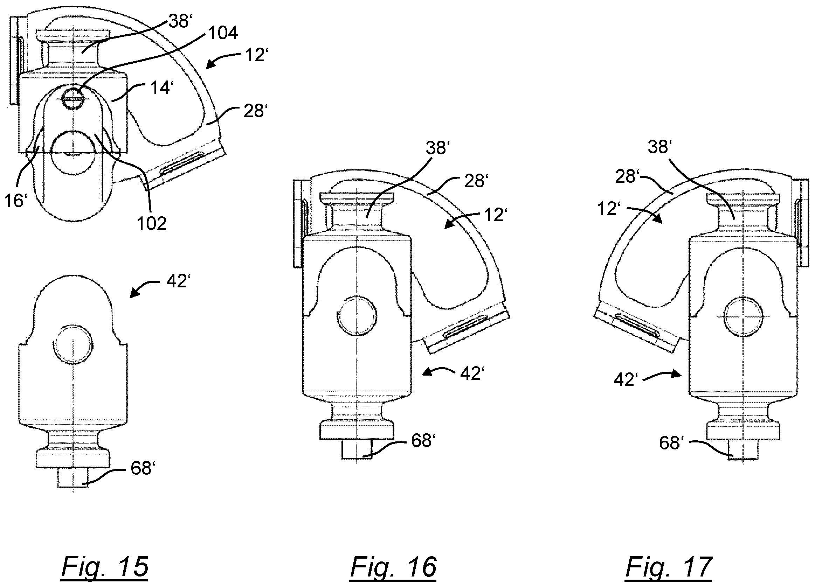

Die Figuren 15 bis 17 zeigen ein erfindungsgemäßes konstruktives Ausführungsbeispiel eines trennbaren hydraulischen Systems. Dabei zeigt Fig. 15 den zusammengebauten, jedoch getrennten Zustand von erstem Teil 12' und zweitem Teil 42'.

Fig. 16 zeigt den Zustand, in dem das erste Teil 12' und das zweite Teil 42' aufeinandergesetzt sind, jedoch der verbundene Zustand aufgrund noch nicht stattgefundener Betätigung des Handgriffs 28' noch nicht vorliegt.

Fig. 17 zeigt den verbundenen Zustand nach Betätigung des Handgriffs 28', in dem ein erster Hydraulikkanal des ersten Teils 12' mit einem zweiten Hydraulikkanal des zweiten Teils 42' hydraulisch durchgängig miteinander verbunden sind.

Das erste verdrehbare Element 16' wird mittels einer Platte 102 im ersten Gehäuseteil 14' gesichert. Die Platte 102 ist beispielsweise mittels einer Schraube 104 mit dem ersten Gehäuseteil 12' verbunden.

Die Figuren 15 bis 17 veranschaulichen beispielhaft zudem eine mögliche Ausgestaltung der Anschlüsse 38' und 68' für Hydraulikkanäle.

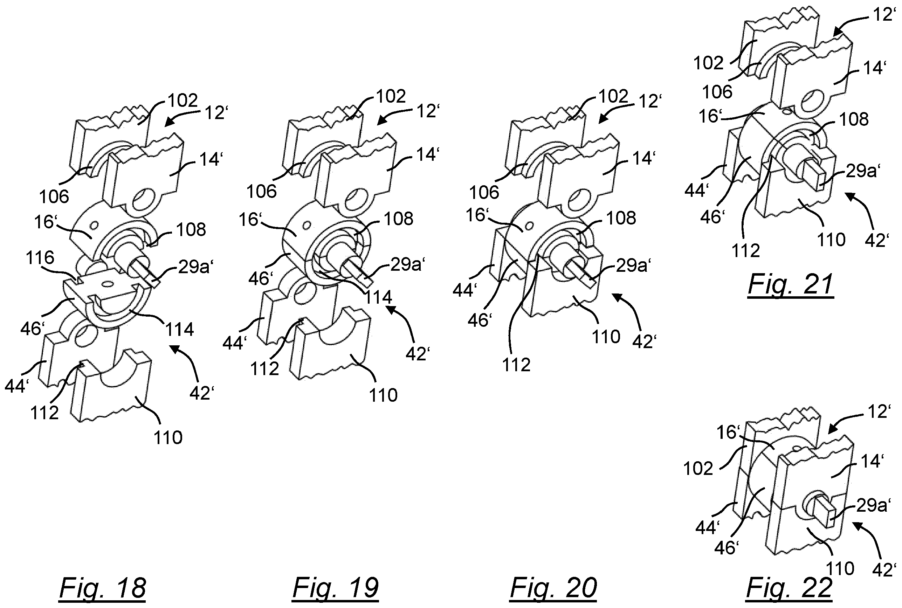

Die Funktion der Platte 102 wird anhand der Figuren 18 bis 22 näher erläutert. Dabei ist darauf hinzuweisen, dass die Figuren 18 bis 22 der besseren Verständlichkeit halber eine vereinfachte Darstellung gegenüber den Figuren 15 bis 17 beinhalten. Außerdem zeigen die Figuren 18 bis 22 im Wesentlichen die Rückansicht der Darstellungen gemäß den Figuren 15 bis 17. D.h., dass bei den Darstellungen gemäß den Figuren 15 bis 17 der Handgriff 28' hinten liegt, während bei den Darstellungen gemäß den Figuren 18 bis 22 der Handgriff vorne wäre, wenn er mit dem entsprechenden Steg 29a' verbunden wäre.

Die Platte 102 weist einen halbkreisförmig angeordneten Steg 106 auf, welcher in einer entsprechend ausgebildeten halbkreisförmigen Ringnut (nicht sichtbar) im ersten verdrehbaren Element 16' eingreift. Das erste verdrehbare Element 16' weist jedoch eine weitere sichtbare gegenüberliegende halbkreisförmige Ringnut 108 auf. Die Platte 102 sowie das erste Gehäuseteil 14' grenzen an dem ersten verdrehbaren Element 16' an, wie in Fig. 22 dargestellt.

Das zweite Teil 42' ist in entsprechender Weise ausgebildet: Eine Platte 110 weist einen halbkreisförmig angeordneten Steg 112 auf, welcher in einer entsprechend ausgebildeten halbkreisförmigen Ringnut 114 im zweiten verdrehbaren Element 46' eingreift. Das zweite verdrehbare Element 46' weist eine weitere gegenüberliegende halbkreisförmige Ringnut 116 auf. Die Platte 110 sowie das zweite Gehäuseteil 44' grenzen an dem zweiten verdrehbaren Element 46' an, wie in Fig. 22 dargestellt.

Erfindungsgemäß sind das erste Teil 12, 12' und das zweite Teil 42, 42' derart ausgebildet, dass beim Wechseln vom verbundenen Zustand in den getrennten Zustand und umgekehrt in den angeschlossenen Hydraulikkanälen keine Hydraulikflüssigkeit verschoben wird. Dies erweist sich als sehr vorteilhaft, da auf diese Weise beim Trennen oder Verbinden des trennbaren hydraulischen Systems kein Ausgleichsvolumen notwendig ist, das z.B. bei Druckmittlersystemen zum Teil prinzipbedingt nicht vorhanden ist.

In den Figuren werden folgende Bezugsziffern verwendet:
- 10: trennbares hydraulisches System
- 12, 12': erstes Teil
- 14, 14': erstes Gehäuseteil
- 16, 16': erstes verdrehbares Element
- 18: erste Drehachse
- 20: erster drehbarer Kanal
- 22: Stirnseite des ersten verdrehbaren Elements
- 24: Umfangsfläche
- 26: erster Achszapfen
- 28: Handgriff
- 29: Verbindung
- 29a, 29a': Steg
- 29b: Nut
- 30: erste Zunge
- 32: erster Vorsprung (Stift)
- 34: Lagerbohrung
- 36: Ausnehmung
- 38, 38': Anschluss für Hydraulikkanal
- 42, 42': zweites Teil
- 44, 44': zweites Gehäuseteil
- 46, 46': zweites verdrehbares Element
- 48: zweite Drehachse
- 50: zweiter drehbarer Kanal
- 52: Stirnseite des zweiten verdrehbaren Element
- 54: Umfangsfläche
- 56: zweiter Achszapfen
- 60: zweite Zunge
- 62: zweiter Vorsprung (Stift)
- 64: Lagerbohrung
- 66: Ausnehmung
- 68, 68': Anschluss für Hydraulikkanal
- 70: erste Nut
- 72: zweite Nut
- 74: dritte Nut
- 76: vierte Nut
- 78: Drehschieber mit zylindrischer Grundform
- 80: Drehschieber mit alternativer Grundform
- 82: Drehschieber mit alternativer Grundform
- 84: Schutzkappe
- 86: Schutzkappengehäuseteil
- 88: verdrehbares Element
- 90: Drehachse des Schutzkappengehäuseteils
- 92: drehbarer Kanal im verdrehbaren Element 88
- 94: Kanal im Schutzkappengehäuseteil
- 96: Ausgleichskammer
- 98: Ausdehnungsmembran
- 100: Öffnung
- 102: Platte
- 104: Schraube
- 106: Steg
- 108: Ringnut
- 110: Platte
- 112: Steg
- 114: Ringnut
- 116: Ringnut

## Patentansprüche

1. Trennbares hydraulisches System mit
einem ersten Teil (12, 12'), an das ein erster Hydraulikkanal zum Führen von Hydraulikflüssigkeit anschließbar ist,
einem zweiten Teil (42, 42'), an das ein zweiter Hydraulikkanal zum Führen von Hydraulikflüssigkeit anschließbar ist,
wobei das erste Teil (12, 12') und das zweite Teil (42, 42') derart wiederholbar trennbar und wieder miteinander verbindbar sind, dass
im verbundenen Zustand, in dem das erste Teil (12, 12') und das zweite Teil (42, 42') miteinander verbunden sind, der erste Hydraulikkanal und der zweite Hydraulikkanal hydraulisch durchgängig miteinander verbunden sind, und
im getrennten Zustand, in dem das erste Teil (12, 12') und das zweite Teil (42, 42') nicht miteinander verbunden sind, sondern voneinander getrennt sind, der erste Hydraulikkanal und der zweite Hydraulikkanal nicht miteinander verbunden, sondern voneinander getrennt sind und der erste Hydraulikkanal durch das erste Teil (12, 12') und der zweite Hydraulikkanal durch das zweite Teil (42, 42') von der Umgebung abgesperrt sind,
wobei das erste Teil (12, 12') und das zweite Teil (42, 42') derart ausgebildet sind, dass beim Wechseln des Zustands weder in dem ersten Hydraulikkanal, noch in dem zweiten Hydraulikkanal Hydraulikflüssigkeit verschoben wird,
wobei das erste Teil (12, 12') ein erstes Gehäuseteil (14, 14') umfasst, das ein erstes, gegenüber dem ersten Gehäuseteil (14, 14') um eine erste Drehachse (18) verdrehbares Element (16, 16') mit einem für Hydraulikflüssigkeit durchgängigen ersten drehbaren Kanal (20) aufnimmt, und
wobei das zweite Teil (42, 42') ein zweites Gehäuseteil (44, 44') umfasst, das ein zweites, gegenüber dem zweiten Gehäuseteil (44, 44') um eine zweite Drehachse (48) verdrehbares Element (46, 46') mit einem für Hydraulikflüssigkeit durchgängigen zweiten drehbaren Kanal (50) aufnimmt,
wobei im verbundenen Zustand von erstem Teil (12, 12') und zweitem Teil (42, 42') das erste verdrehbare Element (16, 16') und das zweite verdrehbare Element (46, 46') derart zusammengefügt sind, dass die erste Drehachse (18) und die zweite Drehachse (48) miteinander fluchten und so eine gemeinsame Drehachse bilden, dass der erste drehbare Kanal (20) hydraulisch durchgängig mit dem ersten Hydraulikkanal verbunden ist und der zweite drehbare Kanal (50) hydraulisch durchgängig mit dem zweiten Hydraulikkanal verbunden ist und dass der erste drehbare Kanal (20) und der zweite drehbare Kanal (50) hydraulisch durchgängig miteinander verbunden sind,
wobei im getrennten Zustand von erstem Teil (12, 12') und zweitem Teil (42, 42') der erste drehbare Kanal (20) hydraulisch gegen den ersten Hydraulikkanal abgesperrt ist und der zweite drehbare Kanal (50) hydraulisch gegen den zweiten Hydraulikkanal abgesperrt ist,
**dadurch gekennzeichnet, dass**
im verbundenen Zustand von erstem Teil (12, 12') und zweitem Teil (42, 42') das erste verdrehbare Element (16, 16') mit dem zweiten Teil (42, 42') und/oder das zweite verdrehbare Element (46, 46') mit dem ersten Teil (12, 12') formschlüssig verbunden ist.

2. Trennbares hydraulisches System nach Anspruch 1,
**dadurch gekennzeichnet, dass**
sowohl das erste verdrehbare Element (16, 16'), als auch das zweite verdrehbare Element (46, 46') jeweils einen Teilzylinder, beispielsweise Halbzylinder, aufweisen,
wobei im verbundenen Zustand von erstem Teil (12, 12') und zweitem Teil (42, 42') beide Teilzylinder derart zusammengefügt sind, dass sie einen zweiteiligen Zylinder (78) bilden, der um eine gemeinsame Drehachse, welche mit der ersten Drehachse (18) und der zweiten Drehachse (48) zusammenfällt, verdrehbar ist.

3. Trennbares hydraulisches System nach Anspruch 1,
**dadurch gekennzeichnet, dass**
sowohl das erste verdrehbare Element (16, 16'), als auch das zweite verdrehbare Element (46, 46') jeweils Teilkugeln, beispielsweise Halbkugeln, oder jeweils einen Teil eines Rotationskörpers (80; 82), beispielsweise halben Rotationskörpers, aufweisen,
wobei im verbundenen Zustand von erstem Teil und zweitem Teil beide Teilkugeln bzw. beide Teile des Rotationskörpers (80; 82) derart zusammengefügt sind, dass sie eine zweiteilige Kugel bzw. einen zweiteiligen Rotationskörper bilden, die/der um eine gemeinsame Drehachse, welche mit der ersten Drehachse und der zweiten Drehachse zusammenfällt, verdrehbar ist.

4. Trennbares hydraulisches System nach einem der vorhergehenden Ansprüche, **dadurch gekennzeichnet, dass**
das erste verdrehbare Element (16, 16') einen ersten Achszapfen (26) aufweist, der um die erste Drehachse (18) herum angeordnet ist und sich nur aus einer Seite des ersten verdrehbaren Elements (16, 16') heraus erstreckt und im ersten Gehäuseteil (14, 14') gelagert ist,
dass das zweite verdrehbare Element (46, 46') einen zweiten Achszapfen (56) aufweist, der um die zweite Drehachse (48) herum angeordnet ist und sich nur aus einer Seite des zweiten verdrehbaren Elements (46, 46') heraus erstreckt und im zweiten Gehäuseteil (44, 44') gelagert ist,
wobei im verbundenen Zustand von erstem Teil (12, 12') und zweitem Teil (42, 42') diese beiden Seiten unterschiedliche, einander gegenüberliegende, durch das erste verdrehbare Element (16, 16') und das zweite (46, 46') verdrehbare Element (46, 46') voneinander beabstandete Seiten bilden.

5. Trennbares hydraulisches System nach einem der vorhergehenden Ansprüche, **dadurch gekennzeichnet, dass**
das erste verdrehbare Element (16, 16') an zwei seiner senkrecht zur ersten Drehachse (18) angeordneten Flächen jeweils eine Ringnut (108), insbesondere Halbringnut, entlang jeweils eines Kreisbogens aufweist, dessen Mittelpunkt auf der ersten Drehachse (18) liegt,
wobei in die eine Ringnut ein am ersten Teil (12, 12') vorgesehener Steg (106) eingreift, der entlang eines Kreisbogens verläuft, dessen Mittelpunkt ebenfalls auf der ersten Drehachse liegt (18), und
wobei in die andere Ringnut ein am zweiten Teil (42, 42') vorgesehener Steg (112) eingreift, der entlang eines Kreisbogens verläuft, dessen Mittelpunkt auf der zweiten Drehachse (48) liegt, und/oder
das zweite verdrehbare Element (46, 46') an zwei seiner senkrecht zur zweiten Drehachse (48) angeordneten Flächen jeweils eine Ringnut (114, 116) entlang jeweils eines Kreisbogens aufweist, dessen Mittelpunkt auf der zweiten Drehachse (48) liegt, wobei in die eine Ringnut (114) ein am zweiten Teil (42, 42') vorgesehner Steg (112) eingreift, der entlang eines Kreisbogens verläuft, dessen Mittelpunkt ebenfalls auf der zweiten Drehachse (48) liegt, und
wobei in die andere Ringnut (116) ein am ersten Teil (12, 12') vorgesehener Steg (106) eingreift, der entlang eines Kreisbogens verläuft, dessen Mittelpunkt auf der ersten Drehachse (18) liegt.

6. Trennbares hydraulisches System nach Anspruch 5,
**dadurch gekennzeichnet, dass**
der am zweiten Teil (42, 42') vorgesehene Steg (112) an einer mit dem zweiten Teil (42, 42') verbundenen, beispielsweise verschraubten, Platte (110) vorgesehen ist und/oder
der am ersten Teil (12, 12') vorgesehene Steg (106) an einer mit dem ersten Teil (12, 12') verbundenen, beispielsweise verschraubten, Platte (102) vorgesehen ist.

7. Trennbares hydraulisches System nach einem der vorhergehenden Ansprüche, **dadurch gekennzeichnet, dass**
an dem ersten Hydraulikkanal ein Druckmessgerät angeschlossen ist und
an dem zweiten Hydraulikkanal ein Druckmittler angeschlossen ist,
wobei im verbundenen Zustand von erstem Teil (12, 12') und zweitem Teil (42, 42') die Hydraulikflüssigkeit einen hydraulischen Druck vom Druckmittler zum Druckmessgerät überträgt.

8. Trennbares hydraulisches System nach einem der vorhergehenden Ansprüche, **dadurch gekennzeichnet, dass**
das erste verdrehbare Element (16, 16') und/oder das zweite verdrehbare Element (46, 46') nur mittels eines abnehmbaren Handgriffs (28) oder mittels eines Werkzeugs, wie z.B. einem Schraubendreher oder einem Innensechskantschlüssel, verdrehbar ist.

9. Trennbares hydraulisches System nach Anspruch 8,
**dadurch gekennzeichnet, dass**
das erste verdrehbare Element (16, 16') und/oder das zweite verdrehbare Element (46, 46'), beispielsweise an seinem jeweiligen Achszapfen (26, 56), eine Aufnahmekontur zur Aufnahme des Handgriffs (28) bzw. des Werkzeugs aufweist.

10. Trennbares hydraulisches System nach einem der vorhergehenden Ansprüche, **dadurch gekennzeichnet,**
**dass** es eine Schutzkappe (84) für das erste Teil (12, 12') umfasst, mit der im getrennten Zustand von erstem Teil (12, 12') und zweitem Teil (42, 42') das erste Teil (12, 12') verschlossen werden kann, und/oder
**dass** es eine Schutzkappe (84) für das zweite Teil (42, 42') umfasst, mit der im getrennten Zustand von erstem Teil (12, 12') und zweitem Teil (42, 42') das zweite Teil verschlossen werden kann.

11. Trennbares hydraulisches System nach Anspruch 10,
**dadurch gekennzeichnet, dass**
die Schutzkappe (84) für das erste Teil (12, 12') ein Schutzkappengehäuseteil (86) umfasst, das ein gegenüber dem Schutzkappengehäuseteil (86) um eine Drehachse (90) des Schutzkappengehäuseteils (86) verdrehbares Element (88) aufnimmt,
wobei im verbundenen Zustand von erstem Teil (12, 12') und Schutzkappengehäuseteil (86) das erste verdrehbare Element (88) des ersten Teils (12, 12') und das verdrehbare Element (88) des Schutzkappengehäuseteils (86) derart zusammengefügt sind, dass die erste Drehachse (18) des ersten Teils (12, 12') und die Drehachse (90) des Schutzkappengehäuseteils (86) miteinander fluchten und dass der erste drehbare Kanal (20) des ersten verdrehbaren Elements (16, 16') hydraulisch durchgängig mit einem drehbaren Kanal (92) im verdrehbaren Element (88) des Schutzkappengehäuseteils (86) verbunden ist, der zu einer Ausgleichskammer (96) im Schutzkappengehäuseteil (86) führt, die mit einer Hydraulikflüssigkeit gefüllt ist und mit einer Ausdehnungsmembran (98) abgeschlossen ist.

## Claims

1. Disconnectable hydraulic system with
a first part (12, 12') to which a first hydraulic channel for guiding hydraulic fluid is connectable,
a second part (42, 42'), to which a second hydraulic channel for guiding hydraulic fluid is connectable,
wherein the first part (12, 12') and the second part (42, 42') are repeatedly disconnectable and reconnectable to one another in such a way that
in a connected state, in which the first part (12, 12') and the second part (42, 42') are connected to one another, the first hydraulic channel and the second hydraulic channel are connected to one another hydraulically through-going, and
in a disconnected state, in which the first part (12, 12') and the second part (42, 42') are not connected to one another but are disconnected from one another, the first hydraulic channel and the second hydraulic channel are not connected to one another but are disconnected from one another and the first hydraulic channel is shut off from the environment by the first part (12, 12') and the second hydraulic channel is shut off from the environment by the second part (42, 42'),
wherein the first part (12, 12') and the second part (42, 42') are being designed in such a way that hydraulic fluid is not displaced either in the first hydraulic channel or in the second hydraulic channel when the state is changed,
wherein the first part (12, 12') comprises a first housing part (14, 14'), which comprises a first element (16, 16') which is rotatable relative to the first housing part (14, 14') about a first axis of rotation (18) and the first element (16, 16') having a first rotatable channel (20) through which hydraulic fluid can pass, and wherein the second part (42, 42') comprises a second housing part (44, 44'), which comprises a second element (46, 46') which is rotatable relative to the second housing part (44, 44') about a second axis of rotation (48) and the second element (46, 46') having a second rotatable channel (50) through which hydraulic fluid can pass,
wherein, in the connected state of the first part (12, 12') and the second part (42, 42'), the first rotatable element (16, 16') and the second rotatable element (46, 46') are joined together in such a way that the first axis of rotation (18) and the second axis of rotation (48) are aligned with one another and thus form a common axis of rotation, in that the first rotatable channel (20) is connected hydraulically through-going to the first hydraulic channel and the second rotatable channel (50) is connected hydraulically through-going to the second hydraulic channel and in that the first rotatable channel (20) and the second rotatable channel (50) are connected hydraulically through-going to one another,
wherein, in the disconnected state of the first part (12, 12') and the second part (42, 42'), the first rotatable channel (20) is hydraulically shut off from the first hydraulic channel and the second rotatable channel (50) is hydraulically shut off from the second hydraulic channel,
**characterized in that**
in the connected state of the first part (12, 12') and the second part (42, 42'), the first rotatable element (16, 16') is positively connected to the second part (42, 42') and/or the second rotatable element (46, 46') is positively connected to the first part (12, 12').

2. Disconnectable hydraulic system according to claim 1,
**characterized in that**
both the first rotatable element (16, 16') and the second rotatable element (46, 46') each have a partial cylinder, for example a half cylinder,
wherein, in the connected state of the first part (12, 12') and the second part (42, 42'), both partial cylinders are joined together in such a way that they form a two-part cylinder (78) which can be rotated about a common axis of rotation which coincides with the first axis of rotation (18) and the second axis of rotation (48).

3. Disconnectable hydraulic system according to claim 1,
**characterized in that**
both the first rotatable element (16, 16') and the second rotatable element (46, 46') each have partial balls, for example hemispheres, or each have a part of a rotational body (80; 82), for example half a rotational body,
wherein, in the connected state of the first part and the second part, both partial balls or both parts of the rotational body (80; 82) are joined together in such a way that they form a two-part ball or a two-part rotational body which can be rotated about a common axis of rotation which coincides with the first axis of rotation and the second axis of rotation.

4. Disconnectable hydraulic system according to one of the preceding claims, **characterized in that**
the first rotatable element (16, 16') has a first pivot pin (26) which is arranged around the first axis of rotation (18) and extends only out of one side of the first rotatable element (16, 16') and is mounted in the first housing part (14, 14'),
the second rotatable element (46, 46') has a second pivot pin (56) which is arranged around the second axis of rotation (48) and extends only out of one side of the second rotatable element (46, 46') and is mounted in the second housing part (44, 44'),
wherein, in the connected state of the first part (12, 12') and the second part (42, 42'), these two sides form different, opposing sides which are spaced apart from one another by the first rotatable element (16, 16') and the second rotatable element (46, 46').

5. Disconnectable hydraulic system according to one of the preceding claims, **characterized in that**
the first rotatable element (16, 16') has, on two of its surfaces arranged perpendicular to the first axis of rotation (18), in each case an annular groove (108), in particular a half-annular groove, along in each case one arc of a circle, the center of which lies on the first axis of rotation (18),
wherein a web (106) provided on the first part (12, 12') engages in the one annular groove, which web extends along an arc of a circle, the center of which also lies on the first axis of rotation (18), and
wherein a web (112) provided on the second part (42, 42') engages in the other annular groove, which web extends along an arc of a circle, the center of which lies on the second axis of rotation (48), and/or
the second rotatable element (46, 46') has an annular groove (114, 116) on each of two of its surfaces arranged perpendicularly to the second axis of rotation (48) along an arc of a circle whose center lies on the second axis of rotation (48), wherein a web (112) provided on the second part (42, 42') engages in the one annular groove (114) and extends along an arc of a circle whose center also lies on the second axis of rotation (48), and
wherein a web (106) provided on the first part (12, 12') engages in the other annular groove (116), which web extends along an arc of a circle, the center of which lies on the first axis of rotation (18).

6. Disconnectable hydraulic system according to claim 5,
**characterized in that**
the web (112) provided on the second part (42, 42') is provided on a plate (110) connected, for example screwed, to the second part (42, 42') and/or
the web (106) provided on the first part (12, 12') is provided on a plate (102) connected, for example screwed, to the first part (12, 12').

7. Disconnectable hydraulic system according to one of the preceding claims, **characterized in that**
a pressure measuring device is connected to the first hydraulic channel and a diaphragm seal is connected to the second hydraulic channel,
wherein in the connected state of the first part (12, 12') and the second part (42, 42'), the hydraulic fluid transmits a hydraulic pressure from the diaphragm seal to the pressure measuring device.

8. Disconnectable hydraulic system according to one of the preceding claims, **characterized in that**
the first rotatable element (16, 16') and/or the second rotatable element (46, 46') can only be rotated by means of a removable handle (28) or by means of a tool, such as a screwdriver or a hexagon socket wrench.

9. Disconnectable hydraulic system according to claim 8,
**characterized in that**
the first rotatable element (16, 16') and/or the second rotatable element (46, 46'), for example on its respective pivot pin (26, 56), has a receiving contour for receiving the handle (28) or the tool.

10. Disconnectable hydraulic system according to one of the preceding claims, **characterized in**
**that** it comprises a protective cap (84) for the first part (12, 12'), with which the first part (12, 12') can be closed in the disconnected state of the first part (12, 12') and the second part (42, 42'), and/or
**that** it comprises a protective cap (84) for the second part (42, 42'), with which the second part (42, 42') can be closed in the disconnected state of the first part (12, 12') and the second part (42, 42').

11. Disconnectable hydraulic system according to claim 10,
**characterized in that**
the protective cap (84) for the first part (12, 12') comprises a protective cap housing part (86) which accommodates an element (88) which is rotatable relative to the protective cap housing part (86) about an axis of rotation (90) of the protective cap housing part (86),
wherein, in the connected state of the first part (12, 12') and the protective cap housing part (86), the first rotatable element (88) of the first part (12, 12') and the rotatable element (88) of the protective cap housing part (86) are joined together in such a way that the first axis of rotation (18) of the first part (12, 12') and the axis of rotation (90) of the protective cap housing part (86) are aligned with one another and that the first rotatable channel (20) of the first rotatable element (16, 16') is connected hydraulically through-going to a rotatable channel (92) in the rotatable element (88) of the protective cap housing part (86), which leads to a compensating chamber (96) in the protective cap housing part (86), which is filled with a hydraulic fluid and is sealed with an expansion membrane (98).

## Revendications

1. Système hydraulique séparable avec
une première partie (12, 12') à laquelle peut être raccordé un premier conduit hydraulique pour transporter du liquide hydraulique,
une deuxième partie (42, 42') à laquelle peut être raccordé un deuxième conduit hydraulique pour transporter du liquide hydraulique,
sachant que la première partie (12, 12') et la deuxième partie (42, 42') peuvent être séparées de façon répétée et à nouveau reliées l'une à l'autre de telle manière qu'
à l'état relié, dans lequel la première partie (12, 12') et la deuxième partie (42, 42') sont reliées l'une à l'autre, le premier conduit hydraulique et le deuxième conduit hydraulique sont hydrauliquement reliés systématiquement l'un à l'autre, et
à l'état séparé dans lequel la première partie (12, 12') et la deuxième partie (42, 42') ne sont pas reliées l'une à l'autre, mais sont séparées l'une de l'autre, le premier conduit hydraulique et le deuxième conduit hydraulique ne sont pas reliés l'un à l'autre, mais sont séparés l'un de l'autre et le premier conduit hydraulique est isolé de l'environnement par la première partie (12, 12') et le deuxième conduit hydraulique par la deuxième partie (42, 42'),
sachant que la première partie (12, 12') et la deuxième partie (42, 42') sont constituées de telle manière que lors du changement d'état, le liquide hydraulique ne sera déplacé ni dans le premier conduit hydraulique, ni dans le deuxième conduit hydraulique,
sachant que la première partie (12, 12') comprend une première partie de boîtier (14, 14') qui loge un premier élément pouvant tourner (16, 16') autour d'un premier axe de rotation (18) par rapport à la première partie de boîtier (14, 14') avec un premier conduit rotatif (20) continu pour le liquide hydraulique, et
sachant que la deuxième partie (42, 42') comprend une deuxième partie de boîtier (44, 44') qui loge un deuxième élément pouvant tourner (46, 46') autour d'un deuxième axe de rotation (48) par rapport à la deuxième partie de boîtier (44, 44') avec un deuxième conduit rotatif (50) continu pour le liquide hydraulique,
sachant qu'à l'état relié de la première partie (12, 12') et de la deuxième partie (42, 42'), le premier élément pouvant tourner (16, 16') et le deuxième élément pouvant tourner (46, 46') sont assemblés de telle manière que le premier axe de rotation (18) et le deuxième axe de rotation (48) sont alignés l'un par rapport à l'autre et forment un axe de rotation commun de telle sorte que le premier conduit rotatif (20) est relié hydrauliquement en continu au premier conduit hydraulique et le deuxième conduit rotatif (50) est hydrauliquement relié systématiquement au deuxième conduit hydraulique et le premier conduit hydraulique (20) et le deuxième conduit rotatif (50) sont hydrauliquement reliés systématiquement l'un à l'autre,
sachant qu'à l'état séparé de la première partie (12, 12') et de la deuxième partie (42, 42'), le premier conduit rotatif (20) est isolé hydrauliquement par rapport au premier conduit hydraulique et le deuxième conduit rotatif (50) est isolé hydrauliquement par rapport au deuxième conduit hydraulique,
**caractérisé en ce qu'**
à l'état relié de la première partie (12, 12') et de la deuxième partie (42, 42'), le premier élément pouvant tourner (16, 16') est relié par conformité de forme à la deuxième partie (42, 42') et/ou le deuxième élément pouvant tourner (46, 46') à la première partie (12, 12').

2. Système hydraulique séparable selon la revendication 1,
**caractérisé en ce que**
tant le premier élément pouvant tourner (16, 16') que le deuxième élément pouvant tourner (46, 46'), comportent respectivement une partie cylindrique, par exemple un demi-cylindre,
sachant qu'à l'état relié de la première partie (12, 12') et de la deuxième partie (42, 42'), les deux parties cylindriques sont assemblées de telle manière qu'elle forment un cylindre en deux parties (78), qui peut tourner autour d'un axe de rotation commun, lequel coïncide avec le premier axe de rotation (18) et le deuxième axe de rotation (48).

3. Système hydraulique séparable selon la revendication 1, **caractérisé en ce que**
tant le premier élément pouvant tourner (16, 16') que le deuxième élément pouvant tourner (46, 46'), comportent respectivement des parties sphériques, par exemple des hémisphères, ou respectivement une partie d'un corps de rotation (80 ; 82), par exemple d'un demi corps de rotation,
sachant qu'à l'état relié de la première partie et de la deuxième partie, les deux parties sphériques ou les deux parties du corps de rotation (80 ; 82) sont assemblées de telle manière qu'elles forment une sphère en deux parties ou un corps de rotation en deux parties, qui peut/peuvent tourner autour d'un axe de rotation commun, lequel coïncide avec le premier axe de rotation et le deuxième axe de rotation.

4. Système hydraulique séparable selon l'une quelconque des revendications précédentes, **caractérisé en ce que**
le premier élément pouvant tourner (16, 16') comporte un premier tourillon (26), qui est disposé autour du premier axe de rotation (18) et ne s'étend que d'un côté du premier élément pouvant tourner (16, 16') et est logé dans la première partie de boîtier (14, 14'),
**en ce que** le deuxième élément pouvant tourner (46, 46') comporte un deuxième tourillon (56), qui est disposé autour du deuxième axe de rotation (48) et ne s'étend que d'un côté du deuxième élément pouvant tourner (46, 46') et est logé dans la deuxième partie de boîtier (44, 44'),
sachant qu'à l'état relié de la première partie (12, 12') et de la deuxième partie (42, 42'), ces deux côtés forment des côtés différents, opposés l'un à l'autre, espacés l'un de l'autre par le premier élément pouvant tourner (16, 16') et le deuxième élément pouvant tourner (46, 46').

5. Système hydraulique séparable selon l'une quelconque des revendications précédentes,
**caractérisé en ce que**
le premier élément pouvant tourner (16, 16') comporte respectivement sur deux de ses surfaces disposées perpendiculairement au premier axe de rotation (18) une rainure annulaire (108), en particulier une rainure semi-annulaire respectivement le long d'un arc de cercle, dont le centre se situe sur le premier axe de rotation (18),
sachant qu'une moulure (106) prévue sur la première partie (12, 12') vient en prise dans une rainure annulaire, qui passe le long d'un arc de cercle, dont le centre se situe également sur le premier axe de rotation (18), et
sachant qu'une moulure (112) prévue sur la deuxième partie (42, 42') vient en prise dans une rainure annulaire, qui passe le long d'un arc de cercle dont le centre se situe sur le deuxième axe de rotation (48), et/ou
le deuxième élément pouvant tourner (46, 46') comporte respectivement sur deux de ses surfaces disposées perpendiculairement au deuxième axe de rotation (48) une rainure annulaire (114, 116) le long respectivement d'un arc de cercle, dont le centre se situe sur le deuxième axe de rotation (48), sachant qu'une moulure (112) prévue sur la deuxième partie (42, 42') vient en prise dans une rainure annulaire (114), qui passe le long d'un arc de cercle, dont le centre se situe également sur le deuxième axe de rotation (48), et
sachant qu'une moulure (106) prévue sur la première partie (12, 12') vient en prise dans l'autre rainure annulaire (116), qui passe le long d'un arc de cercle, dont le centre se situe sur le premier axe de rotation (18) .

6. Système hydraulique séparable selon la revendication 5, **caractérisé en ce que**
la moulure (112) prévue sur la deuxième partie (42, 42') est prévue sur une plaque (110) reliée, par exemple vissée, à la deuxième partie (42, 42'), et/ou
la moulure (106) prévue sur la première partie (12, 12') est prévue sur une plaque (102) reliée, par exemple vissée, à la première partie (12, 12').

7. Système hydraulique séparable selon l'une quelconque des revendications précédentes, **caractérisé en ce qu'**
un manomètre est raccordé au premier conduit hydraulique et
un transmetteur de pression est raccordé au deuxième conduit hydraulique,
sachant qu'à l'état relié de la première partie (12, 12') et de la deuxième partie (42, 42'), le liquide hydraulique transmet une pression hydraulique du transmetteur de pression au manomètre.

8. Système hydraulique séparable selon l'une quelconque des revendications précédentes,
**caractérisé en ce que**
le premier élément pouvant tourner (16, 16') et/ou le deuxième élément pouvant tourner (46, 46') ne peuvent tourner qu'au moyen d'une poignée (28) amovible ou au moyen d'un outil, comme par ex. : un tournevis ou une clé six pans femelle.

9. Système hydraulique séparable selon la revendication 8, **caractérisé en ce que**
le premier élément pouvant tourner (16, 16') et/ou le deuxième élément pouvant tourner (46, 46'), comportent par exemple sur leurs tourillons respectifs (26, 56), un profil de réception pour recevoir la poignée (28) ou l'outil.

10. Système hydraulique séparable selon l'une quelconque des revendications précédentes,
**caractérisé en ce qu'**
il comprend un capuchon de protection (84) pour la première partie (12, 12') avec lequel à l'état séparé de la première partie (12, 12') et de la deuxième parie (42, 42'), la première partie (12, 12') peut être fermée, et/ou
**en ce qu'**il comprend un capuchon de protection (84) pour la deuxième partie (42, 42') avec lequel à l'état séparé de la première partie (12, 12') et de la deuxième parie (42, 42'), la deuxième partie peut être fermée.

11. Système hydraulique séparable selon la revendication 10,
**caractérisé en ce que**
le capuchon de protection (84) comprend une partie de boîtier de capuchon de protection (86) pour la première partie (12, 12'), qui loge un élément pouvant tourner (88) autour d'un axe de rotation (90) de la partie de boîtier de capuchon de protection (86) par rapport à la partie de boîtier de capuchon de protection (86),
sachant qu'à l'état relié de la première partie (12, 12') et de la partie de boîtier de capuchon de protection (86), le premier élément pouvant tourner (88) de la première partie (12, 12') et l'élément pouvant tourner (88) de la partie de boîtier de capuchon de protection (86) sont assemblés de telle manière que le premier axe de rotation (18) de la première partie (12, 12') et l'axe de rotation (90) de la partie de boîtier de capuchon de protection (86) sont alignés l'un avec l'autre et **en ce que** le premier conduit rotatif (20) du premier élément pouvant tourner (16, 16') est relié hydrauliquement relié systématiquement à un conduit rotatif (92) dans l'élément pouvant tourner (88) de la partie de boîtier de capuchon de protection (86), qui conduit à une chambre d'équilibrage (96) dans la partie de boîtier de capuchon de protection (86), qui est remplie d'un liquide hydraulique et est raccordée à une membrane de dilatation (98).
